Europäisches Patentamt

European Patent Office

Office européen des brevets

(11) Veröffentlichungsnummer: **0 381 038**
**A1**

## (12) EUROPÄISCHE PATENTANMELDUNG

(21) Anmeldenummer: 90101436.5

(22) Anmeldetag: 25.01.90

(51) Int. Cl.⁵: **G01S 13/44, G01S 13/22, G01S 7/40**

(30) Priorität: 31.01.89 CH 312/89

(43) Veröffentlichungstag der Anmeldung:
08.08.90 Patentblatt 90/32

(84) Benannte Vertragsstaaten:
CH IT LI NL

(71) Anmelder: **SIEMENS-ALBIS AKTIENGESELLSCHAFT**
**PV/Patente und Verträge Postfach**
**CH-8047 Zürich(CH)**

(72) Erfinder: **Pacozzi, Pierino**
**Friesenberghalde 3**
**CH-8055 Zürich(CH)**
Erfinder: **Schmid, Werner**
**Winzerhalde 42**
**CH-8049 Zürich(CH)**

(54) **Radarsystem.**

(57) Die Erfindung bezieht sich auf ein Monopulsradargerät, wie es beim Zielfolgeradar eingesetzt wird. Dabei handelt es sich um eine Ausführungsform mit mehrkanaliger Auswertung (KA-KD) im Empfänger (4-13, 15). Um die eigentlich auszuwertenden Signale zu erhalten, werden die zunächst empfangenen Signale in einem Komparator (11) in die entsprechende Form gebracht. Der Komparator (11) kombiniert nicht nur die Signale, sondern wertet ihre Zeitlage und ihren Pegel auf zulässige Werte aus. Bei so als fehlerhaft erkannten Signalen ersetzt er sie für die Auswertung durch vorangegangene richtige Signale.

FIG 1

## Radarsystem

Die Erfindung betrifft ein Radarsystem mit einem Sender und Empfänger bei dem für eine Unterdrückung von unerwünschten, an Spiegelflächen hervorgerufenen Echosignalanteilen Signalverarbeitungsschaltungen für ein Summensignal, zwei Differenzsigna len und und ein Kreuztermsignal vorgesehen sind und bei dem die Impulswiederholungsfrequenz des Senders einstellbar ist und bei dem weiterhin einem Zieldatenrechner ein Integrationsfilter, sowie eine Divisionsstufe vorgeschaltet sind, in der die genannten Fehlersignale auf das Summensignal normiert werden.

Bei der Zielverfolgung durch Folgeradarsysteme werden aus den empfangenen Echosignalanteilen Winkelfehlersignale erzeugt, aus denen die Position von Zielobjekten bestimmbar ist. Die Echosignalanteile enthalten neben dem eigentlichen Nutzsignal vom Zielobjekt eine Vielzahl von unerwünschten Echosignalanteilen, z. B. hervorgerufen durch Boden- und Seereflexionen. Insbesondere gilt es, die durch Seereflexionen entstehenden Spiegeleffekte zu kompensieren, um Mißweisungen des Zielfolgeradarsystems zu vermeiden. Dazu wird meist aus den empfangenen Echosignalanteilen ein Summen-, zwei Differenzsignale und ein Kreuztermsignal gebildet, die getrennten Signalverarbeitungska nälen zugeführt werden, wie es beispielsweise in den Schweizer Patentschriften CH 592 667 und CH 629 898 beschrieben ist. Die nach dieser sogenannten Crossfeed-Methode arbeitenden Radarsysteme erfordern ein Optimum an Präzision in der Signalverarbeitung. Die Amplitude der Winkelfehlersignale soll dabei nur vom Winkel zwischen Zielobjekt und der Boresight-Achse der Antenne abhängig sein. Neben der geforderten Pegelunabhängigkeit der Winkelfehlersignale muß der Gültigkeitzeitpunkt der Winkelfehlersignale präzise bekannt sein. Der Pegel der reflektierten Echosignalanteile ist aber nicht konstant, da sich die dem Radarstrahl bietende Reflexionsfläche durch die Bewegung des Zielobjektes ständig ändert. Durch diese sogenannten Zielfluk tuationen treten Pegelschwankungen auf, die herkömmlich durch eine automatische Verstärkungsregelung des Summensignals im Empfänger bis zu einem bestimmten Grad ausgeregelt werden können. Dabei bringt die automatische Verstärkungsregelung die Pegel der Summen- und Differenzsignale nach definierten Einschwingzeiten wieder auf normierte Ablagewerte. Schwierigkeiten können entstehen, wenn trotz der automatischen Verstärkungsregelung im Empfänger durch Zielfluktuationen kurzzeitig falsche Winkelfehlersignale entstehen, oder wenn die abgegebenen Daten nicht zeitlich aktuell sind. Da bei Zielfluktuationen Pegelsprünge über mehrere dB-Dekaden auftreten können, kann trotz einer automatischen Verstärkungsregelung die Konstanz der Winkelfehlersignale meist nicht aufrecht erhalten werden. Besonders nachteilig erweisen sich nicht verarbeitbare Pegelsprünge der Winkelfehlersignale da für eine präzise Berechnung der Zielablage ein nicht begrenzter Signalpegel erforderlich ist. Eine digitale Sinalverarbeitung erfordert oft ein aufwendige Synchronisationseinrichtung in der Datenübergabe an den Zieldatenrechner, wobei durch spezielle Maßnahmen der Gültigkeitszeitpunkt der Daten kontrolliert werden muß.

Der Erfindung liegt die Aufgabe zugrunde, auch bei durch Zielfluktuationen auftretenden Pegelschwankungen der empfangenen Echosignale eine Bestimmung der Zielablage mit einem Optimum an Präzision zu ermöglichen. Dem kommt eine besondere Bedeutung beim Einsatz in den Fällen zu, bei denen Radarsysteme die sogenannte Crossfeed-Methode anwenden, um Ziele unter Spiegelbedingungen fehlerfrei zu verfolgen.

Diese Aufgabe wird erfindungsgemäß dadurch gelöst, daß der Divisionstufe eines Signalüberwachungseinrichtung vorgeschaltet ist, die einen Komparator mit zwei Schwellwerten aufweist, der in Abhängigkeit vom Amplitudenwert des eintreffenden Summensignales die Weitergabe der Winkelfehlersignale derart steuert, daß einerseits bei einer innerhalb der Komparatorschwelle liegenden, gültigen Summensignalamplitude eine direkte Weitergabe der Winkelfehlersignale an die Divisionsstufe erfolgt und das andererseits bei einer unter- oder Überschreitung der Kompara torschwellwerte durch die eintreffende Summensignalamplitude eine Weitergabe der zeitlich früheren, gültigen Winkelfehlersignale an die Divisionsstufe erfolgt.

Um eine fehlerfreie Signalverarbeitung von Echosignalen mit Pegelschwankungen, insbesondere auch während der Einschwingzeit der automatischen Verstärkungsregelung zu gewährleisten, wird nach der automatischen Verstärkungsregelung in den Signalverarbeitungsschaltungen eine zweite Normierung vorgenommen. Dabei wird jedes Winkelfehlersignal in einer dem Zieldatenrechner vorgeschalteten Divisionsstufe durch den Wert des Summensignales dividiert. Dadurch wird trotz Pegelschwankungen ein Winkelfehlersignal erzeugt, das auch bei Einschwingvorgängen der automatischen Verstärkungsregelung den richtigen Wert aufweist. Somit wird die Aufgabe der automatischen Verstärkungsregelung darauf reduziert, möglichst alle Winkelfehlersignale durch lineare Verarbeitung zur Divisionsstufe zu bringen. Bei kräftigen Zielfluktuationen kann es trotzdem vorkommen, daß die Winkelfehlersignale kurzzeitig in Begrenzung kommen (Signalüberlauf). Andererseits kann es auch vorkommen, daß die Winkelfehlersignale einen Minimalwert unterschreiten (Signalunterlauf). Um festzustellen, ob solche Überlauf- bzw. Unterlaufsignale anstehen, wird erfindungsgemäß von jedem eintreffenden Summensignal der Amplitudenwert gemessen. Über- oder unterschreitet dieser Pegel vorgeschriebene Schwellwerte, liegt das Signal außerhalb des normalen Arbeitsbereiches der Divisionsstufe. In diesem Fall werden die zeitlich vorhergehenden, gültigen Winkelfehlersignale solange zur Divisionsstufe weitergeleitet, bis der lineare Arbeitsbereich wieder erreicht ist. Dadurch wird vermieden, daß speziell bei Signalunterlauf nach der Division der Winkelfehlersignale durch das Summensignal eine zu grobe Abstufung der Winkelfehlersignale entsteht. Da somit das Servofilter der Antennennachführeinrichtung nicht mit grob quantisierten Signaldaten gespeist wird, werden in der Verfolgung für diese Zeit keine Ablagefehler erzeugt.

Zur Anhebung der Wirksamkeit der oben beschriebenen Methode wird zur Einstellung der Impulswiederholungsfrequenz ein Gene rator vorgesehen, der die Impulswiederholungsfrequenz derart steuert, daß die von der Impulswiederholungsfrequenz abhängigen Dopplersignalanteile der empfangenen Echosignale, die von See-und Regenechos eine unterschiedliche Geschwindigkeit aufweisen, außerhalb der von See- und Regenechos verursachten Spektrallinien liegen.

Durch geeignete Ausfilterung des Zielsignales aus Clutter- und auch Rauschsignalen wird der Einfluß der von diesen Signalen verursachten Störfluktuationen minimiert.

Vorteilhalft ist das Integrationsfilter digital ausgebildet und die Filterkonstanten des Integrationsfilters sind im Takt der Impulswiederholungsfrequenz umschaltbar. Dadurch entstehen konstante Übertragungszeiten, womit der Datengültigkeitszeitpunkt konstant bleibt.

In einer weiteren vorteilhaften Ausgestaltung des erfindungsge mäßen Radarsystems mit einer automatischen Verstärkungsregelung im Empfänger und einer vom Zieldatenrechner gesteuerten Antennennachführeinrichtung mit einem Servofilter wird die Filterkonstante der automatischen Verstärkungsregelung klein gegenüber der Filterkonstanten des Integrationsfilters und insbesondere klein gegenüber der Sevofilterkonstanten der Antennennachführeinrichtung gewählt. Dadurch wird unterstützend erreicht, daß der Datengültigkeitszeitpunkt während konstanter Übertragungszeiten konstant bleibt.

In einer weiteren vorteilhaften Ausgestaltung der Erfindung ist vorgesehen, daß das Integrationsfilter der Divisionsstufe vorgeschaltet ist und daß für die Berechnung der Filterausgangssi gnale im Integrationsfilter eine Reduktion von Winkelfehlersignaldaten soweit erfolgt, daß eine zeitaktuelle Übergabe der Filterausgangssignale an den Zieldatenrechner gewährleistet ist. Durch dieses sogenannte Dumpen von Fehlersignaldaten wird die Aufgabe der Divisionsstufe reduziert. Dabei wird der Dumpfaktor (Verringerung des Datenweitergabetaktes am Filterausgang infolge reduzierter Signalbandbreite) so gewählt, daß der Zieldatenrechner zu einem von ihm gewählten Zeitpunkt jederzeit die aktuellsten Daten ohne Syncronisation abfragen kann. Das heißt, daß die Winkelfehlersignaldaten in einer entsprechend höheren Taktrate bereitgelegt werden, als der Zieldatenrechner sie abholt.

In einer weiteren vorteilhaften Ausgestaltung der Erfindung ist die Signalüberwachungseinrichtung so ausgebildet, daß sie in den Signalverarbeitungskanälen einen ersten Zwischenspeicher aufweist, der über vom Komparator gesteuerte Schalter mit einem zweiten Zwischenspeicher verbunden ist. Liegt der Wert des vom Komparator geprüften Summensignals innerhalb der Komparatorschwellwerte, werden die Winkelfehlersignale über die geschlossenen Schalter und über den zweiten Zwischenspeicher der Divisionsstufe weitergeleitet. Liegt die Summensignalamplitude außerhalb der Komparatorschwellwerte, wird der Datenfluß durch die Schalter unterbrochen und die zuletzt abgespeicherten Werte der Winkelfehlersignale solange zur Divisionsstufe weitergeleitet, bis wieder gültige Fehlerwinkelsignaldaten im zweiten Zwischenspeicher eintreffen.

Im folgenden wird ein Ausführungsbeispiel der Erfindung anhand von Zeichnungen näher erläutert.

In der Figur 1 ist ein Blockschaltbild eines Radargerätes nach der Erfindung dargestellt.

In der Figur 2 ist die erfindungsgemäße Ausführungsform einer Signalüberwachungseinrichtung nach Figur 1 im Detail gezeigt.

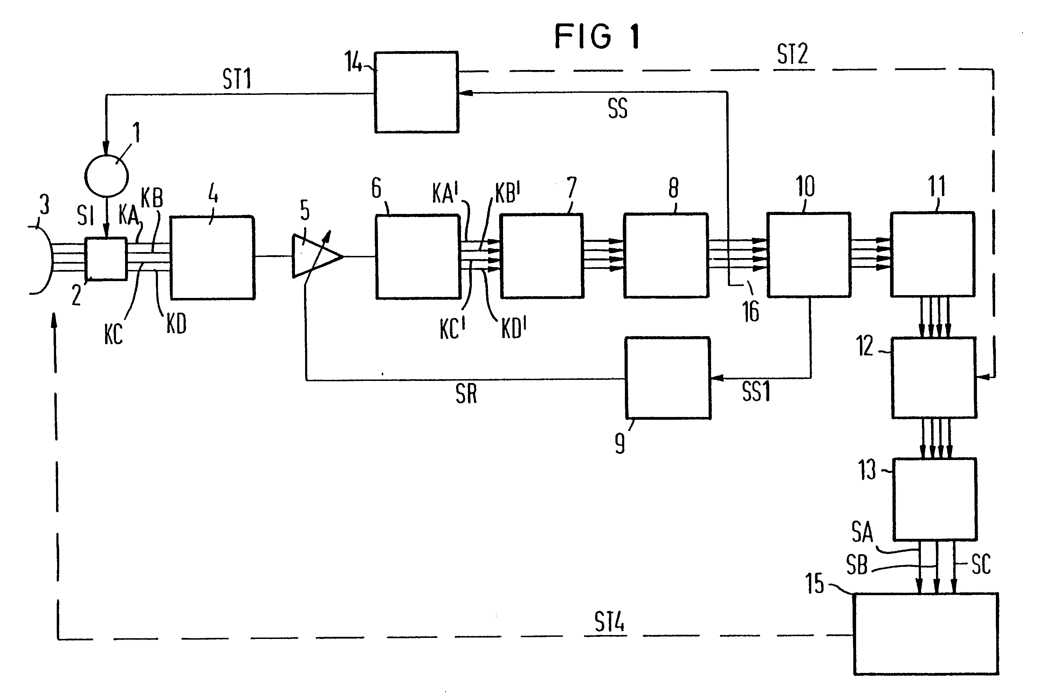

Das in Figur 1 dargestellte Radarsystem weist einen Sender 1 auf, der eingangsseitig mit einem Generator 14 verbunden ist. Der Sender 1 ist über einen Sende-/Empfangsumschalter 2 mit einer Sende-/Empfangsantenne verbunden. Der Sende-/Empfangsumschalter 2 ist mit einem Hochfrequenzkomparator kombiniert empfangsseitig über vier Mischer mit vier Signalverarbeitungskanälen KA, KB, KC und KD an einen Multiplexer 4 angeschlossen. Der Multiplexer 4 ist ausgangsseitig mit einem geregelten Zwischenfrequenzverstärker 5 verbunden, dem ein Demultiplexer 6 nachgeschaltet ist. Dem Demultiplexer 6 sind ausgangsseitig vier ZF-Videodemodulatoren nachgeschaltet, die mit weiteren in Reihe geschalteten Signalverarbeitungsschaltungen über die Signalverarbeitungskanäle KA-KB-KG-KD verbunden. Die Signalverar beitungsschaltungen bestehen dabei im einzelnen in Richtung zur Abarbeitung aus einer Sample- und Holdschaltung 7, Dopplerfilter 8, Demodulatorstufe 10, Signalüberwachungseinrichtung 11, Integrationsfilter 12, und Divisionsstufe 13. Die Divisionsstufe 13 ist ausgangsseitig mit einem Zieldatenrechner 15 verbunden, der ausgangsseitig an die Antennennachführeinrichtung angeschlossen ist. Der Zwischenfrequenzverstärker 5 ist mit einer Verstärkungsregelungsschaltung 9 verbunden, die eingangsseitig an die Demodulatorstufe 10 angeschlossen ist. Zwischen dem Dopplerfilter 8 und der Demodulatorstufe 10 ist im Signalverarbeitungskanal KD- ein Auskoppler 16 vorgesehen, der an den Generator 14 angeschlossen ist. Ein weiterer Ausgang des Generators 14 ist mit dem Integrationsfilter 12 verbunden.

Die Arbeitsweise des Radarsystems wird nachstehend erläutert.

Der Generator 14 zur Steuerung der Impulswiederholungsfrequenz triggert über das Steuersignal ST1 den Sender 1. Von diesem gelangen die Sendeimpulse SI über den Sendeempfangsumschalter zur gemeinsamen Sende-/Empfangsantenne 3. Die von einem Zielobjekt reflektierten Echosignale gelangen über die Sende-/Empfangsantenne 3 und dem Hochfrequenzkomparator zu den Mischern, die die vier Echosignale in die Zwischenfrequenzebene umsetzen. Die aus den empfangenen Echosignalen erzeugten Winkelfehlersignale sind im einzelnen ein Summensignal, zwei Differenzsignale sowie ein Kreuztermsignal, welche über die Signalverarbeitungskanäle KA,KB,KC und KD dem Multiplexer 4 zugeführt werden. Im Multiplexer 4 werden die Winkelfehlersignale jeweils Zwischenfrequenzvorverstärkern zugeführt. In Verzögerungsleitungen werden die einzelnen Signale anschließend unterschiedlich verzögert und addiert, worauf sie nacheinander einem gemeinsamen Zwischenfrequenzverstärker 5 zugeführt werden. Im Demultiplexer 6 werden die durch den Zwischenfrequenzverstärker 5 nacheinander verstärkten Echosignale durch entsprechende Verzögerungsleitungen wieder auf die parallelen Signalverarbeitungskanäle KA-,KB-,KC- und KD- aufgeteilt und den Zwischenfrequenzdemodulatoren zugeführt. In der Sample- und Holdschaltung 7 werden die Dopplersignalanteile der einzelnen Winkelfehlersignale erzeugt, die anschließend einem Dopplerfilter 8 zugeführt werden, wo die unerwünschten Echosignalanteile von den Zielechos getrennt werden. Das gefilterte bipolare Summenvideosignale werden in der Demodulatorstufe 10 gleichgerichtet, so daß nur mehr ein positiver Signalanteil vorhanden ist. In dieser Demodulatorstufe 10 wird das gleichgerichtete Summensignales SS1 zudem ausgekoppelt und der Verstärkungsregelungsschaltung 9 zugeführt. Diese Verstärkungsregelungsschaltung 9 steuert über das Regelsignal SR den Zwischenfrequenzverstärker 5 derart, daß am Dopplerfilterausgang 7 die Amplitude des Summensignales einen konstanten Wert aufweist. Die am Ausgang der Demodulatorstufe 10 verfügbaren Winkelfehlersignale durchlaufen eine Signalüberwachungseinrichtung 11, wo der Amplitudenwert des Summensignales mittels eines Komparators geprüft wird. Liegt der Amplitudenwert des Summensignales innerhalb der vom Komparator vorgegebenen Schwellwerte, liegen die Winkelfehlersignale innerhalb des zulässigen Verarbeitungsbereiches. In diesem Fall werden die Winkelfehlersignale über die Verarbeitungskanäle dem Integrationsfilter 12 und in weiterer Folge der Divisionsstufe 13 zugeführt. Über- oder unterschreitet der Amplitudenwert des Summensignales die vorgegebenen Schwellwerte liegen die Winkelfehlersignale außerhalb des zulässigen, gültigen Arbeitsbereiches. In diesem Fall werden die zeitlich vorhergehenden Winkelfehlersignale solange zur weiteren Verarbeitung an das Integrationsfilter 12 und folgende geleitet, bis der Amplitudenwert der eintreffenden Summensignale wieder im gültigen Arbeitsbereich liegt. Das Integrationsfilter 12 ist als Tiefpaßfilter ausgebildet, und reduziert die Signalbandbreite auf einen der Datenübertragungsrate angepaßt wird. In der dem Integrationsfilter 12 nachgeschalteten Divisionsstufe 13 werden die Winkelfehlersignale auf das Summensignal normiert. Durch die Signalüberwachungseinrichtung 11 ist gewährleistet, daß nur zulässige, im linearen Signalverarbeitungsbereich liegende Signalpegel der Winkelfehlersignale an die Divisionsstufe 13 gelangen. Da auf diese Weise Signale mit beispielsweise unter der Komparatorschwelle liegenden Amplitude nicht an die Divisionsstufe 13 gelangen können, wird eine grobe Abstufung der Winkelfehlersignale vermieden. Die in der Divisionsstufe durch das Summensignal dividierten Winkelfehlersi gnale für Azimut SA, Elevation SE, und Cross SC werden dem Zieldatenrechner 15 zugeführt. Dieser berechnet aus den Winkelfehlersignalen die Zielablage und steuert über ein Servofilter mittels des Steuersignales ST4 die Antennennachführeinrichtung.

Um die Wirksamkeit der vorstehend beschriebenen Methode zu erhöhen, wird die Impulswiederholungsfrequenz im Generator 14 so gesteuert, daß die entstehende Dopplerfrequenz außerhalb von See oder Regen Glutter-Echos liegt. Da das Spektrum eines von einem bewegten Ziel herrührenden Echos von der Impulswiederholungsfrequenz abhängig ist, kann durch geeignete Wahl der Impulswiederholungsfrequenz der Einfluß von Clutter- und Rauschsignalen minimiert werden. Dazu wird über den Auskoppler 16 das Summensignal dem Generator 14 zugeführt, in dem u. a. das Summensignal einer Spektralanalyse unterworfen wird und daraus eine optimale Impulswiederholungsfrequenz gewählt wird, falls die Geschwindigkeit des Zieles vom Clutter-Echo unterscheidbar ist.

Ist das Integrationsfilter 12 digital ausgebildet, so werden die Filterkoeffizienten in Abhängigkeit von der Impulswiederholungsfrequenz des Generators 14 über das Steuersignal ST2 umgeschaltet. Damit entstehen konstante Übertragungszeiten und der Datengültigkeitszeitpunkt bleibt konstant.

Durch eine geeignete Wahl des Dumpfaktors im Integrationsfil ter 12 für die Berechnung der Filterausgangssignale kann die Aufgabe der Divisionsstufe 13 vorteilhaft reduziert werden. Damit wird erreicht, daß der Zieldatenrechner 15 jederzeit gültige Daten ohne Synchronisation von der Divisionsstufe abholen kann.

Wird die Auswertung der Winkelfehlersignale digital realisiert, erfolgt eine Analogdigitalwandlung zwischen der Sample- und Holdschaltung 7 und dem Dopplerfilter 8 und die nachfolgende Signalverarbeitung erfolgt seriell im Zeitmultiplexverfahren.

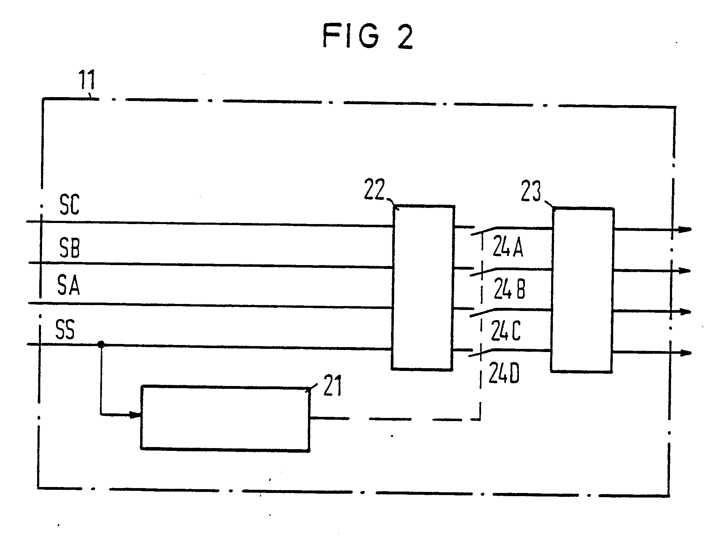

In Figur 2 ist die erfindungsgemäße Signalüberwachungseinrichtung 11 detailliert dargestellt. Das in der Gleichrichterstufe 10 (Fig. 1) gleichgerichtetes Summensignal SS weist im Gegensatz zu den restlichen Winkelfehlersignalen nur eine Polarität auf. Dieses Signal wird im Komparator 21 mit einem Minimalwert und einem Maximalwert verglichen. Liegt der Amplitudenwert des Summensignales innerhalb dieser beiden Schwellwerte, werden die Winkelfehlersignale Summe SS, Azimut SA, Elevation SE und Crossfeed SC (Kreuztermsignal) über einen ersten Zwischenspeicher 22 und den geschlossenen Schaltern 24a, 24b, 24c und 24d und einem zweiten Zwischenspeicher 23 den Eingängen der Integrationsstufe 12 (Fig. 1) zugeführt. Liegt die Summensignalamplitude außerhalb der beiden Schwellwerte, unterbrechen die Schalter 24a - 24d den Datenfluß und die im zweiten Zwischenspeicher 23 abgespeicherten Werte der zuletzt gültigen Winkelfehlersignale werden an die Integrationsstufe 12 geleitet. Dies erfolgt solange, bis der Amplitudenwert der neu eintreffenden Summensignale wieder im innerhalb der beiden Schwellwerte des Komparators 21 liegt und damit neue, gültige Winkelfehlersignaldaten über die geschlossenen Schalter 24a - 24d und den Zwischenspeicher 23 an die Integrationsstufe 12 gelangen.

Es ist auch möglich, die beiden Zwischenspeicher 22 und 23 sowie die Schalter 24a bis 24d digital zu realisieren. Dies kann beispielsweise durch die Verwendung eines Doppelspeichers erfolgen, bei dem der Eingangsspeicher in einem ersten Schritt die Winkelfehlersignaldaten empfängt. In einem zweiten Schritt wird der Komparator 21 abgefragt, ob diese Winkelfehlersignaldaten brauchbar sind, das heißt, wenn die Summensignalamplitude innerhalb der beiden Komparatorschwellwerte liegt. Wenn das zutrifft, werden die Winkelfehlersignaldaten in den Ausgangspeicher kopiert, welcher sie in einem dritten Schritt an die Integrationsstufe 12 weiterleitet. Sind die Winkelfehlersignaldaten nicht brauchbar, werden sie nicht an den Ausgangspeicher überschrieben. Dieser beinhaltet dann die zeitlich vorhergehenden Winkelfehlersignaldaten und leitet diese an die Integrationsstufe 12 weiter.

**Ansprüche**

1. Radarsystem mit einem Sender und Empfänger bei dem für eine Unterdrückung von unerwünschten, an Spiegelflächen hervorgeru fen Echosignalanteilen Signalverarbeitungsschaltungen für ein Summensignal, zwei Differenzsignalen und ein Kreuztermsignal vorgesehen sind und bei dem die Impulswiederholungsfrequenz des Senders einstellbar ist und bei dem weiterhin einem Zieldatenrechner ein Integrationsfilter sowie eine Divisionsstufe vorgeschaltet sind, in der die genannten Winkelfehlersignale auf das Summensignal normiert werden, dadurch gekennzeichnet, daß der Divisionsstufe (13) eine Signalüberwachungseinrichtung (11) vorgeschaltet ist, die einen Komparator (21) aufweist, der in Abhängigkeit vom Amplitudenwert des eintreffenden Summensignales (SS) die Weitergabe der Winkelfehlersignale derart steuert, daß einerseits bei einer innerhalb der Komparatorschwellwerte liegenden gültigen Summensignalamplitude eine direkte Weitergabe der Winkelfehlersignale an die Divisionsstufe erfolgt und daß andererseits bei einer Unter- oder Überschreitung der Komparatorschwellwerte durch die eintreffende Summensignalamplitude eine Weitergabe der zeitlich früheren, gültigen Winkelfehlersignale an die Divisionsstufe (13) erfolgt.

2. Radarsystem mit einem Sender und Empfänger bei dem für eine Unterdrückung von unerwünschten, an Spiegelflächen hervorgerufen Echosignalanteilen Signalverarbeitungsschaltungen für ein Summensignal, zwei Differenzsignalen und ein Kreuztermsignal vorgesehen sind und bei dem die Impulswiederholungsfrequenz des Senders einstellbar ist und bei dem weiterhin einem Zieldatenrechner ein Integrationsfilter sowie eine Divisionsstufe vorgeschaltet sind, in der die genannten Winkelfehlersignale auf das Summensignal normiert werden, insbesondere nach Anspruch 1, dadurch gekennzeichnet, daß zur Einstellung der Impulswiederholungsfrequenz ein Generator (14) vorgesehen ist, der die Impulswiederholungsfrequenz derart steuert, daß die von der Impulswiederholungsfrequenz abhängigen Dopplersignalanteile der empfangenen Echosignale, die von See- und Regen-Echos eine unterscheidbare Geschwindigkeit aufweisen, außerhalb dieser von See- und Regen-Echos verursachten Spektrallinien liegen.

3. Radarsystem nach einem der vorhergehenden Ansprüche, dadurch gekennzeichnet, daß das Integrationsfilter (12) digital ausgebildet ist und daß die Filterkonstanten des Integrationsfilters (12) im Takt der Impulswiederholungsfrequenz umschaltbar sind.

4. Radarsystem nach einem der vorhergehenden Ansprüche mit einer automatischen Verstärkungsregelung (9) im Empfänger und einer vom Zieldatenrechner (15) gesteuerten Antennennachführeinrichtung mit einem Servofilter, dadurch gekennzeichnet, daß die Filterkonstante der automatischen Verstärkungsregelung klein gegenüber der Filterkonstanten des Integrationsfilters (12) und insbesondere klein gegenüber der Servofilterkonstanten der Antennennachführeinrichtung gewählt ist.

5. Radarsystem nach einem der vorhergehenden Ansprüche, dadurch gekennzeichnet, daß das Integrationsfilter (12) der Divisionsstufe (13) vorgeschaltet ist und daß für die Berechnung der Filterausgangssignale im Integrationsfilter (12) eine Reduktion von Winkelfehlersignaldaten soweit erfolgt, daß eine zeitaktuelle Übergabe der Integrationsfilterausgangssignale an den Zieldatenrechner (15) gewährleistet ist.

6. Radarsystem nach einem der vorhergehenden Ansprüche, dadurch gekennzeichnet, daß die Signalüberwachungseinrichtung (11) in den Signalverarbeitungskanälen einen ersten Zwischenspeicher (22) aufweist, der über vom Komparator (21) gesteuerte Schalter (24A,24B,24C,24D) mit einem zweiten Zwischenspeicher 23 verbunden ist.

FIG 1

89P9805

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 514 566 (SIEMENS-ALBIS) * Patntansprüche 1-3; Seite 3, letzter Abschnitt - Seite 4, Abschnitte 1,2; Seite 8, Abschnitt 2 - Seite 9; Figuren 1,2 * --- | 1,6 | G 01 S 13/44 G 01 S 13/22 G 01 S 7/40 |
| A | DE-A-3 108 594 (SIEMENS) * Zusammenfassung; Seiten 13,15,16 * --- | 1,6 | |
| A | IEEE REGION 5 CONFERENCE 1988 SPANNING THE PEAKS OF ELECTROTECHNOLOGY, Colorado Springs, Colorado, 21.-23. März 1988, Seiten 38-44, IEEE, New York, US; J. SIMPSON: "PFR set selection for pulse-Doppler radars" * Seiten 38,39, Abschnitt "Medium RPF pulse - Doppler and clutter" * --- | 2-5 | |
| A | EP-A-0 260 670 (LICENTIA) * Spalte 3, Zeilen 16,40; Zusammenfassung * --- | 2-5 | |
| A | EP-A-0 251 498 (TORN EMI) * Seite 4, Zeilen 9,18; Zusammenfassung * --- | 2-5 | RECHERCHIERTE SACHGEBIETE (Int. Cl.5) G 01 S |
| A | US-A-4 486 756 (PEREGRIM et al.) * Spalte 6, Zeile 22 - Spalte 7, Zeile 3; Figur 3; Patentansprüche 1-3; Zusammenfassung * ----- | 1,6 | |

Der vorliegende Recherchenbericht wurde für alle Patentansprüche erstellt

| Recherchenort | Abschlußdatum der Recherche | Prüfer |
|---|---|---|
| DEN HAAG | 02-05-1990 | ANGRABEIT F.F.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.........................................................

& : Mitglied der gleichen Patentfamilie, übereinstimmendes Dokument